Europäisches Patentamt

European Patent Office

Office européen des brevets

(19)

(11) **EP 1 531 508 A2**

(12) **EUROPEAN PATENT APPLICATION**

(43) Date of publication:
**18.05.2005 Bulletin 2005/20**

(51) Int Cl.$^7$: **H01M 8/04**

(21) Application number: **04025326.2**

(22) Date of filing: **25.10.2004**

(84) Designated Contracting States:
**AT BE BG CH CY CZ DE DK EE ES FI FR GB GR
HU IE IT LI LU MC NL PL PT RO SE SI SK TR**
Designated Extension States:
**AL HR LT LV MK**

(30) Priority: **05.11.2003 JP 2003375656**

(71) Applicant: **NISSAN MOTOR CO., LTD.
Yokohama-shi Kanagawa-ken (JP)**

(72) Inventors:
• **Yamazaki, Tsutomu
Yokosuka-shi Kanagawa-ken (JP)**
• **Nakata, Masaaki
Yokohama-shi Kanagawa-ken (JP)**
• **Yamada, Naohito
Yokosuka-shi Kanagawa-ken (JP)**

(74) Representative: **Grünecker, Kinkeldey,
Stockmair & Schwanhäusser Anwaltssozietät
Maximilianstrasse 58
80538 München (DE)**

(54) **Fuel cell system**

(57)　A fuel cell system is disclosed as having a water storage device 2 whose inside is provided with two partition walls 9, 10 to divide the same into three regions $R_1$, $R_2$, $R_3$, and among these, a middle region $R_2$ is provided with a water guide pipe 11 and a water return pipe 12 through which water is taken out or returned to the region $R_2$. The partition walls 9, 10 have communicating bores $13a_1$, $13a_2$ through which water flow is admitted.

## FIG.1

EP 1 531 508 A2

**Description**

## BACKGROUND OF THE INVENTION

The present invention relates to a fuel cell system having water circulation means, by which water, stored in a water storage device, is cyclically supplied to a fuel cell, and technology for appropriately taking water out of the water storage device.

As fuel cells for use in fuel cell systems, solid polymer type fuel cells have heretofore been known to be suitable for use in automobiles. The solid polymer type fuel cells refer to structures wherein a solid polymer membrane is interposed as an electrolyte membrane between a hydrogen electrode and an air electrode. With such solid polymer type fuel cells, reaction occurs to cause hydrogen gas to be separated into hydrogen ions and electrons on the hydrogen electrode while oxidant gas reacts with the hydrogen ions and the electrons on the air electrode to create water. When this takes place, the solid polymer membrane functions as an ion conductor to allow the hydrogen ions to transfer through the solid polymer membrane toward the air electrode.

With the solid polymer type fuel cell, the solid polymer membrane is saturated with water to have a function as an ion-conducting electrolyte while having a function to separate hydrogen and oxygen from one another. With the solid polymer type fuel cell having such characteristics, as the solid polymer membrane encounters a shortage of water content, ion resistance increases to cause hydrogen and oxygen to mix with one another, resulting in a difficulty in generating electric power. For this reason, a need arises for supplying the solid polymer membrane with water from an outside to positively humidify the same. To this end, with fuel cell systems in usual practice, attempts have been made to provide a certain type of humidifying means, for humidifying the solid polymer membrane, including technique for humidifying hydrogen to be supplied.

In usual practice, the humidifying means of such kind has undertaken the form of a circulation channel incorporated in the fuel cell system including a fuel cell and a humidifier while storing humidifying water in a water storage device so as to allow water to be cyclically supplied to these devices from an inside of the water storage device at a demanded flow rate.

Further, in order to maintain the fuel cell at a proper temperature, attempts have heretofore been made to perform cooling using coolant water. The supply and circulation of such coolant water are performed with the water storage device and the circulation channel as set forth above.

Here, it is to be noted that water freezes in the circulation path. It is predicted that a fuel cell powered automobile using the solid polymer type fuel cell, as set forth above, as a prime power source runs in cold areas. When this happens, water inside the circulation channel freezes at temperatures below freezing point, causing the fuel cell to encounter a difficulty in smoothly starting up.

Therefore, Japanese Patent provisional Publication No. 9-147892 proposes a fuel cell system that during start-up of the fuel cell system, water is supplied to a circulation channel and an inside of a fuel cell and during halt of the fuel cell, water is returned to a water storage device.

## SUMMARY OF THE INVENTION

However, with the fuel cell system, set forth above, applied to a moving object such as a vehicle set forth above, issues arise as described below. If water deviation occurs in the water storage device due to acceleration acting on the vehicle during leaning, turning, accelerating and decelerating motions of the vehicle, probabilities occur in a water pump, by which water is taken out of the water storage device, with an issue of an intake of air, resulting in disturbance in smoothly supplying water to the fuel cell system. If water is not smoothly supplied to the fuel cell system, probabilities occur where the operation of the fuel cell is disturbed.

Therefore, the present invention has an object to provide a fuel cell system wherein even when a vehicle is applied with acceleration like in leaning, turning, accelerating and decelerating motions of the vehicle, water deviation occurring in a water takeoff region of a water storage device can be eliminated to overcome an issue of an intake of air for thereby realizing smooth supply of water.

According to an aspect of the present invention, a fuel cell system comprises a fuel cell, a water storage device, having partition walls, by which an inside of the water storage device is divided into a plurality of regions, a water circulating section operative to cyclically supply water, stored in the water storage device, to the fuel cell, and a water purge section operative to permit water in the fuel cell and water in the water circulating section to return to the water storage device during a halt of the fuel cell, wherein the plurality of partition walls include communicating bores through which water is admitted to flow into a region, closer to a center among the divided regions, or to flow into the other regions during movement of water stored in the water storage device.

## BRIEF DESCRIPTION OF THE DRAWINGS

Fig. 1 is a typical view illustrating an essential structure of a fuel cell system of a first embodiment.
Fig. 2 is a typical view illustrating an internal structure of a water storage device.
Fig. 3 is a front view illustrating a partition wall formed with a communicating bore.

Fig. 4 is a cross sectional view illustrating a shape of the communicating bore that is chamfered.

Fig. 5 is a view illustrating a status where after water begins to be supplied, a water level drops in the water storage device.

Fig. 6 is a view illustrating a status where a water level drops in a region $R_2$ inside the water storage device.

Fig. 7 is a view illustrating a status where water deviation occurs due to acceleration applied in leftward or rightward turning motion of a vehicle.

Fig. 8 is a typical view illustrating an essential structure of a fuel cell system of a second embodiment.

Fig. 9 is a flowchart illustrating a basic sequence of operations to be executed by a controller of the fuel cell system of the second embodiment for controlling the flow rate of a water pump.

Fig. 10 is a typical view illustrating an essential structure of a fuel cell system of a third embodiment.

Fig. 11 is a flowchart illustrating a basic sequence of operations to be executed by a controller of the fuel cell system of the third embodiment for controlling the flow rate of a water pump.

## DETAILED DESCRIPTION OF THE PREFERRED EMBODIMENS

Hereinafter, fuel cell systems of various embodiments to which the present invention is applied are described below with reference to the accompanying drawings. Also, since the present invention is principally related to a water delivery system, the following embodiments will be described with reference to only a structure related to the water delivery system and description of the other structures is omitted. The present invention is applicable to any of fuel cell systems with respective water delivery systems, and other structures of the fuel cell system may adopt any of structures of the related art.

(First Embodiment)

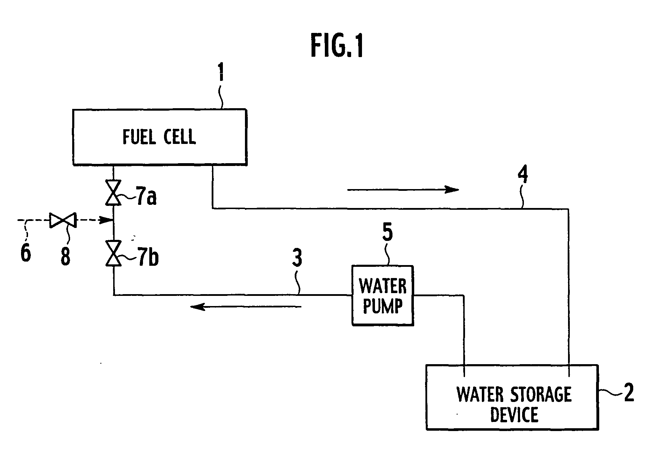

Fig. 1 typically shows one structural example of a water delivery system of a fuel cell system of a first embodiment according to the present invention. The water delivery system is comprised of a fuel cell 1 that generates electric power, a water storage device 2 in which water is stored, a water supply channel 3 and water return channel 4 through which water is cyclically supplied, and a water pump 5 through which water is circulated. Connected to the water supply channel 3 are an airflow line 6 through which pressurized air required for water purging is introduced, and valves 7a, 7b by which the water supply channel 3 is shut off during water purging. Also, disposed in the airflow line 6 is a valve 8 that blocks the introduction of pressurized air during normal operation.

With the fuel cell system having such a structure set forth above, during the operation of the fuel cell 1, the fuel cell 1 is cyclically supplied with water by means of the water supply channel 3 and the water return channel 4. Also, during a halt of the fuel cell 1, requisite pressurized air is introduced through the airflow line 6 to perform water purging, whereupon water, inside the fuel cell 1 and associated component parts of the circulation channel, is returned to the water storage device 2.

With such a fuel cell system, the water storage device 2 is formed in a substantially cuboid configuration and installed on a vehicle, such as a fuel cell powered automobile, such that the water storage device 2 has a short side orientated in a fore and aft direction of the vehicle and a long side orientated in a widthwise direction of the vehicle. Thus, with the water storage device 2 formed in an elongated configuration aligned in the widthwise direction of the vehicle, a need arises for suppressing movement of water inside the water storage device 2 caused by leftward or rightward turning motions of the vehicle.

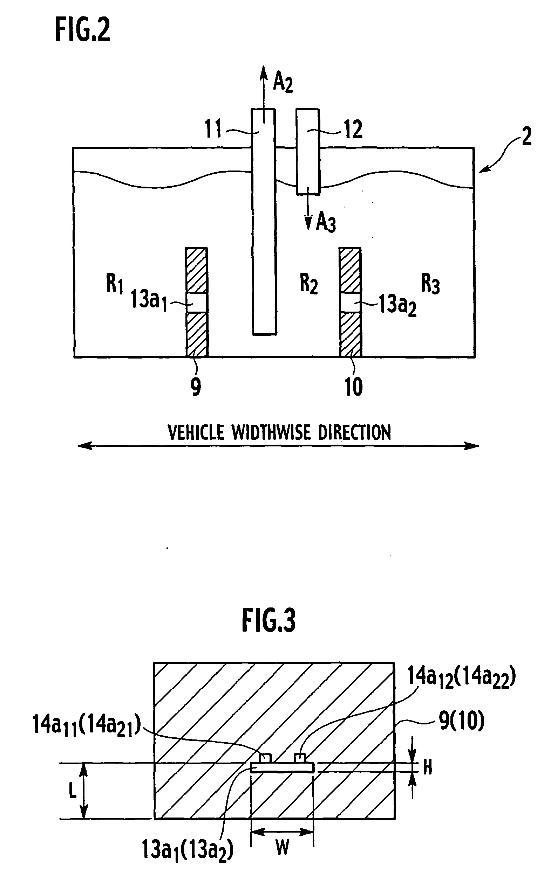

Fig. 2 shows an internal structure of the water storage device 2. Due to the elongated structure of the water storage device 2 aligned in the widthwise direction of the vehicle as set forth above, water deviation occurs as a result of a binding effect (a so-called virtual force) acting in a direction opposite to an accelerating direction (as shown by an arrow $A_1$) caused by leftward or rightward turning motions of the vehicle and to overcome this issue, the water storage device 2 is provided with two pieces of partition walls 9, 10 to divide an inside of the water storage device 2 into three regions along the widthwise direction of the vehicle. The presence of the two pieces of partition walls 9, 10 allows the inside of the water storage device 2 to be divided into three regions $R_1$, $R_2$, $R_3$.

Among these regions, inserted to a middle region $R_2$ are a water guide pipe 11, playing a role as a base end portion of the water supply channel 3 forming the water delivery system, which extends in the middle region $R_2$ toward an area close proximity to a bottom portion thereof and a water return pipe 12, forming a distal end portion of the water return channel 4, which extends to an upper area of the middle region $R_2$. Water inside the water storage device 2 is drawn by the water pump 5 from the region $R_2$ through the water guide pipe 11 (as shown by an arrow $A_2$) and circulated through the circulation channel, whereupon water is returned through the water return pipe 12 back to the region $R_2$ again (as shown by an arrow $A_3$).

Formed in the partition walls 9, 10, respectively, are communicating bores $13a_1$, $13a_2$ that provide fluid communication between adjacent regions to admit water to flow in a longitudinal direction (along the widthwise direction of the vehicle) of the water storage device 2. The communicating bores $13a_1$, $13a_2$ take the form of apertures each formed in an elongated opening shape that is longer in a horizontal direction (along the widthwise direction of the vehicle) than in a vertical direction (along a vertical direction of the vehicle) as shown in Fig. 3. That is, the opening shapes of the communicating bores $13a_1$, $13a_2$ have a dimension W in the horizontal direction remarkably greater than a dimension H in the vertical direction (as expressed as W>H). Also, formed in the partition wall 9 (10) are notches $14a_{11}$, $14a_{12}$ ($14a_{21}$, $14a_{22}$) in contact with the communicating bore $13a_1$ ($13a_2$), and the presence of the notches $14a_{11}$, $14a_{12}$ ($14a_{21}$, $14a_{22}$) enlarges an opening surface area Ad of the communicating bore $13a_1$ ($13a_2$). The notches $14a_{11}$, $14a_{12}$ ($14a_{21}$, $14a_{22}$) are contemplated to ease water to flow from the regions $R_1$, $R_3$ to the region $R_2$.

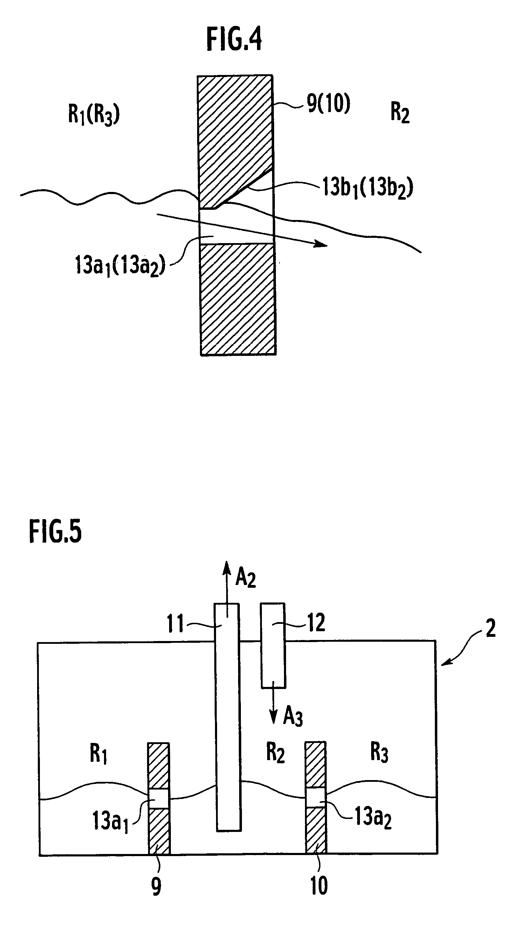

Further, in order to ease the flow of water from the regions $R_1$, $R_3$ to the region $R_2$, it is effective for the communicating bores $13a_1$, $13a_2$ to be chamfered at sides facing the region $R_2$, as shown in Fig. 4, to form slopes $13b_1$, $13b_2$.

The height L at which the communicating bores $13a_1$, $13a_2$ are formed on the partition walls 9, 10 are set to a level that is lower than a water level appearing after start-up so as to ensure water to flow into the region $R_2$. Additionally, in order to minimize adverse affect caused by a leaned attitude during a halt of the vehicle, the communicating bores $13a_1$, $13a_2$ are formed in the respective partition walls 9, 10 at positions close proximity to a center in a fore and aft direction of the vehicle.

With the fuel cell system with such a water delivery system, a need arises to have two functions: one is to satisfy a start-up achievement capability; and the other to take counter measures for intake of air.

Here, by the term "start-up achievement capability" is meant the capability of the water pump 5 that is available to discharge water at a water circulation rate demanded for the fuel cell system during a phase in which the water storage device 2 reaches a bankfull stage at a halt of the system and during a subsequent phase after the fuel cell system has started up and associated various component parts are filled with water.

In the meanwhile, by the term "an intake of air encountered by the water pump 5" is meant the phenomenon where water deviation occurs inside the water storage device 2 due to the binding effect accompanied by the acceleration caused by leaning and turning motions of the vehicle during acceleration or deceleration thereof and a water level exceptionally drops in the region, to which the water guide pipe 11 is inserted, to cause the water pump 5 to encounter the intake of air with a resultant difficulty in maintaining a discharge pressure, and by the term "counter measures for an intake of air" is meant the counter measures to be undertaken to preclude the occurrence of such intake of air.

With the fuel cell system of the presently filed embodiment, the start-up achievement capability can be obtained by the provision of the partition walls 9, 10 formed with the communicating bores $13a_1$, $13a_2$, re-

spectively, which are ensured to have appropriate opening surface areas Ad.

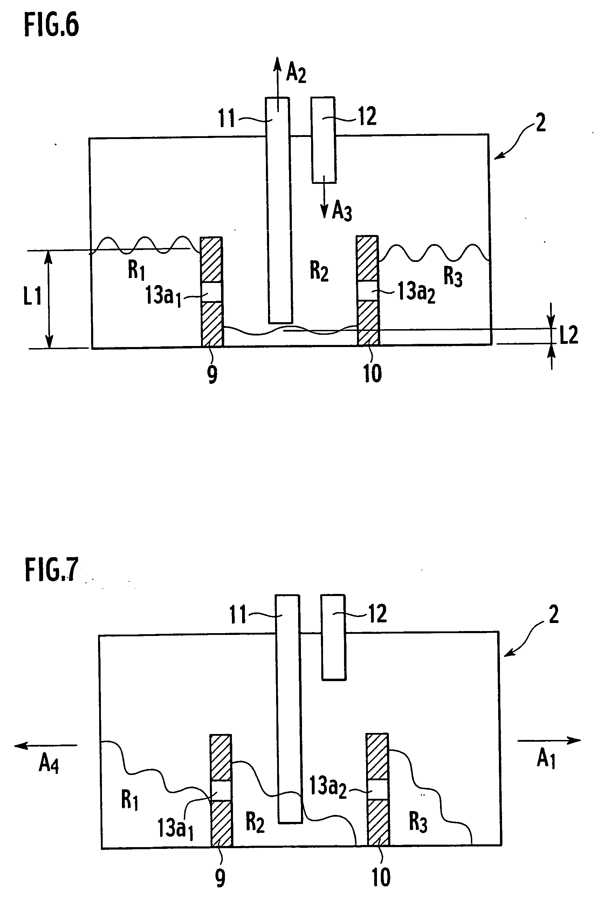

That is, the two partition walls 9, 10 divide the inside of the water storage device 2 into the three regions $R_1$, $R_2$, $R_3$ along the widthwise direction of the vehicle as set forth above. With the water pump 5 started up followed by start-up of the fuel cell system, water inside the water storage device 2 is drawn by the water pump 5 through the water guide pipe 11 in the region $R_2$ (as shown by the arrow $A_2$) and after water circulates through the circulation path, water is returned to the region $R_2$ again through the water return pipe 12 (as shown by the arrow $A_3$). Consequently, as the water pump 5 is started up followed by start-up of the fuel cell system, first, a drop occurs in a water surface in the region $R_2$ as shown in Fig. 6.

Thus, with the water surface in the region $R_2$ dropped to some extent, in principal, water flows into the region $R_2$ from the regions $R_1$, $R_3$. When this takes place, however, if the opening surface areas Ad of the communicating bores $13a_1$, $13a_2$ formed in the respective partition walls 9, 10 are small, no rapid water flow takes place and as shown in Fig. 6, a water level $L_1$ still remain high in the regions $R_1$, $R_3$, causing circumstances where a water level $L_2$ in the region $R_2$ remains lower than a lower end of the water guide pipe 11. As a result, probabilities occur where before various parts of the system are filled with water after start-up of the fuel cell system, the water pump 5 is hard to discharge water at a circulation flow rate demanded for the fuel cell system.

On the contrary, if the opening surface areas Ad of the communicating bores $13a_1$, $13a_2$ are set to have adequately large values, water is able to quickly flows from the adjacent regions $R_1$, $R_3$ into the region $R_2$ to prevent the water level in the region $R_2$ from becoming lower than the lower end of the water guide pipe 11. Accordingly, the discharge pressure of the water pump 5 can be maintained during a phase in which the fuel cell system has started up and a subsequent phase in which the various parts of the system are filled with water. Thus, in order to establish the start-up achievement capability, it is preferable for the opening surface areas Ad of the communicating bore $13a_1$, $13a_2$ formed in the respective partition walls 9, 10 to be large. Also, in this event, it is preferable for the amount of water to be drawn by the water pump 5 to be reduced as small as possible. This is because the presence of less amount of water to be drawn by the water pump 5 decreases a drop in water level in the region $R_2$.

With the presently filed embodiment, the opening shapes of the communicating bores $13a_1$, $13a_2$ are formed to ensure the respective opening surface areas Ad each with an elongated configuration aligned in the horizontal direction, thereby increasing the flow of water from the regions $R_1$, $R_3$ into the region $R_2$ as much as possible. This is because the water flow from the regions $R_1$, $R_3$ into the region $R_2$ depends on a difference in water head between the regions $R_1$, $R_3$ and the region $R_2$

and if the opening shapes of the communicating bores $13a_1$, $13a_2$ are elongated in the vertical direction, probabilities occur where even if the opening surface areas Ad are increased, the communicating bores $13a_1$, $13a_2$ have areas with no contribution to the water flow.

Next, with respect to the counter measures for the intake of air, with the presently filed embodiment, since the water storage device 2 is arranged to have the elongated shape along the widthwise direction of the vehicle, a need arises for taking counter measures to preferentially address water deviation caused by a binding effect applied in a direction opposite to the acceleration occurring due to leftward or rightward turning motions of the vehicle.

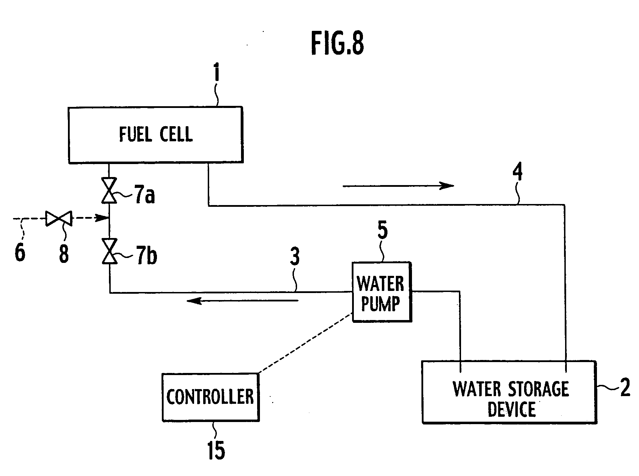

As set forth above, with the presently filed embodiment, the inside of the water storage device 2 is divided by the two partition walls 9, 10 into three regions $R_1$, $R_2$, $R_3$ along the widthwise direction of the vehicle and with the water level remaining after start-up of the system, if the vehicle is steered to turn leftward or rightward, water begins to deviate to one side of the water storage device 2 due to the binding effect applied in the direction (as shown by an arrow $A_4$) opposite to the direction in which the acceleration acts (as shown by the arrow $A_1$) during the turning motion of the vehicle as shown in Fig. 7. That is, if the acceleration G as a result of the turning motion is applied in the direction as shown by the arrow $A_1$ in Fig. 7, water remaining in the region $R_2$ flows through the communicating bore $13a_1$, formed in the partition wall 9, into the region $R_1$ and water remaining in the region $R_3$ flows through the communicating bore $13a_2$, formed in the partition wall 10, into the region $R_2$.

When this takes place, if the opening surface areas Ad of the communicating bore $13a_1$, formed in the partition wall 9, and the communicating bore $13a_2$, formed in the partition wall 10, are substantially equal, then, the amount of water flowing from the region $R_2$ and the amount of water flowing into the region $R_2$ are substantially equal, resulting in almost no variation in the amount of water present in the region $R_2$. Also, when the water level in the water storage device 2 takes a water level after start-up of the system and later on, a volume of water drawn from the region $R_2$ by the water pump 5 is returned to the region $R_2$ through the water return pipe 12 in an equaled volume and no variation takes place in the volume of water in the region $R_2$.

From these views, appropriately determining a height position and the opening surface areas Ad of the communicating bores $13a_1$, $13a_2$, to be formed in the respective partition walls 9, 10, depending on the magnitude of the acceleration G, caused during the turning motion of the vehicle, provides no situations where the water pump 5 encounters a condition with the intake of air.

From a standpoint of counter measures for the intake of air, the opening surface areas Ad of the communicating bores $13a_1$, $13a_2$ may be preferably as small as possible and the volume of water to be drawn by the water pump 5 may be preferably reduced as small as possible. Accordingly, considering both the start-up achievement capability and the counter measures for the intake of air, it is preferable for the opening surface areas Ad of the communicating bores $13a_1$, $13a_2$ to be set to fall in a range of As < Ad < Ag. Here, a reference "As" designates the minimum opening surface area that makes it possible to maintain a water level available for water to be taken out of the water storage device 2 after water has been taken out of the water storage device 2 in a volume required to fill up the fuel cell 1 and the circulation path (involving an inside of the water supply channel 3, an inside of the water return channel 4 and insides of associated component parts of these channels) during start-up of the system, or during a process in which water is being taken out. Also, a reference "Ag" designates the maximum opening surface area that makes it possible to maintain a water level available for water to be taken out of the water storage device 2 during a phase in which the acceleration G is applied due to fore and aft movements or leftward or rightward turning motions of the vehicle. With the opening surface areas Ad of the communicating bores $13a_1$, $13a_2$ set in such a way discussed above, it becomes possible to strike a balance between the ensuring of the start-up achievement capability and the counter measures for the intake of air.

As set forth above, with the fuel cell system of the presently filed embodiment, the partition walls 9, 10 divide the inside of the water storage device 2 into the three regions $R_1$, $R_2$, $R_3$ to allow the water pump 5 to take water out or return water to the region $R_2$ while permitting the water flow among the regions $R_1$, $R_2$, $R_3$ through the communicating bores $13a_1$, $13a_2$ formed in the respective partition walls 9, 10. On that premise, appropriately determining the opening surface areas Ad of the communicating bores $13a_1$, $13a_2$ and controlling the flow rate of water enables water deviation to be minimized in the region $R_2$, from which water is taken out of the water storage device 2, for thereby enabling to maintain an appropriate water level. Consequently, with the fuel cell system of the presently filed embodiment, smooth supply of water can be realized.

(Second Embodiment)

A fuel cell system of a second embodiment further includes, in addition to the structure of the first embodiment described above, a controller 15 for controlling the flow rate of the water pump 5. The other structure is identical to that of the first embodiment and description of the same is herein omitted.

As set forth above with reference to the first embodiment, for a certain time interval after start-up, water is taken out of the region $R_2$ in the water storage device 2 and a difference in water head among the regions $R_1$, $R_2$, $R_3$ increases. Accordingly, this results in a sufficient volume of water flowing from the regions $R_1$, $R_3$ into the region $R_2$. However, upon elapse of a given time interval after start-up, water flows into the region $R_2$ and the difference in water head between the regions $R_1$, $R_3$ and the region $R_2$ decreases, resulting in a decrease in the volume of water flowing into the region $R_2$.

When this takes place, if the amount of water to be drawn by the water pump 5 is greater than the volume of water flowing into the region $R_2$, probabilities occur where the water level in the region $R_2$ drops below a lower end of the water guide pipe 11 to cause the water pump 5 to suffer from the intake of air, causing in a probability where no discharge pressure can be maintained.

Therefore, with the presently filed embodiment, the controller 15 decreases a discharge rate (the volume of water to be taken out of the region $R_2$) of the water pump 5 after a given time interval has elapsed when water begins to be taken out of the water storage device 2 during start-up, ensuring the water level of the region $R_2$. This prevents the water pump 5 from encountering the intake of air, making it possible to allow a discharge pressure of the water pump 5 to be appropriately maintained.

An elapsed time, in which the discharge pressure of the water pump 5 is caused to decrease, varies depending on various factors of the fuel cell system and is preliminarily acquired based on experiments or calculations. Also, arrangement is made such that at a timing in which the operation to fill up water in the inside of the fuel cell 1 and the inside of the water circulation path is terminated and the operation is shifted into normal operation, the discharge rate of the water pump 5 is restored to a prescribed discharge rate to allow the water pump 5 to take water out of the region $R_2$ at a standard flow rate.

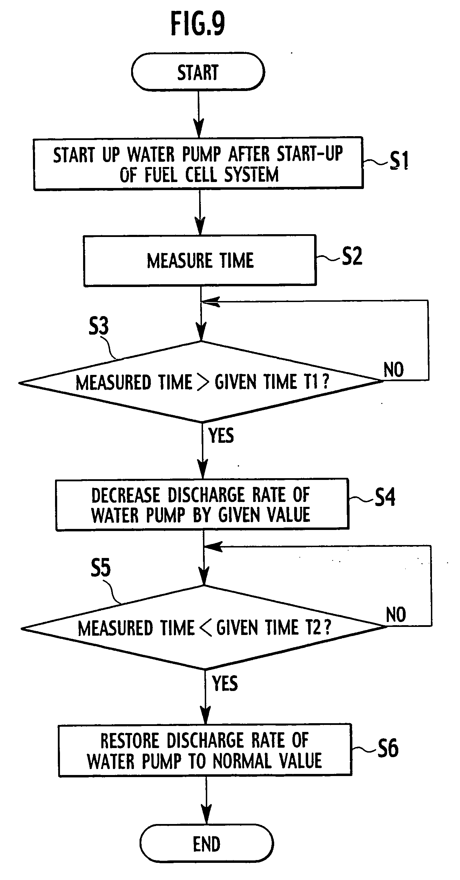

Fig. 9 is a flowchart illustrating a basic sequence of operations to be executed by the controller 15 in the fuel cell system of the presently filed embodiment for controlling the flow rate of the water pump 5.

With the presently filed embodiment, first, the water pump 5 is started up, followed by start-up of the fuel cell system, to begin the taking out of water from the region $R_2$ in the water storage device 2 at the standard water flow rate (step S1). After start-up, the operation is started to measure time with a timer incorporated in the controller 15 (step S2) and discrimination is made to find whether the time measured by the timer reaches a given timer T1 (an elapsed time, which is preliminarily acquired on the experiments and calculations, before the discharge rate of the water pump 5 is decreased) (step S3).

At a stage in which the time measured by the timer exceeds the given time T1, the discharge rate of the water pump 5 is decreased by a given value (step S4). Thereafter, discrimination is made to find whether the time measured by the timer reaches a given timer T2 (a time before the inside of the fuel cell 1 and the inside of the water circulation path are completely filled with water) (step S5) and at a stage in which the time measured by the timer exceeds the given time T2, the discharge rate of the water pump 5 is restored to the prescribed discharge rate (step S6).

(Third Embodiment)

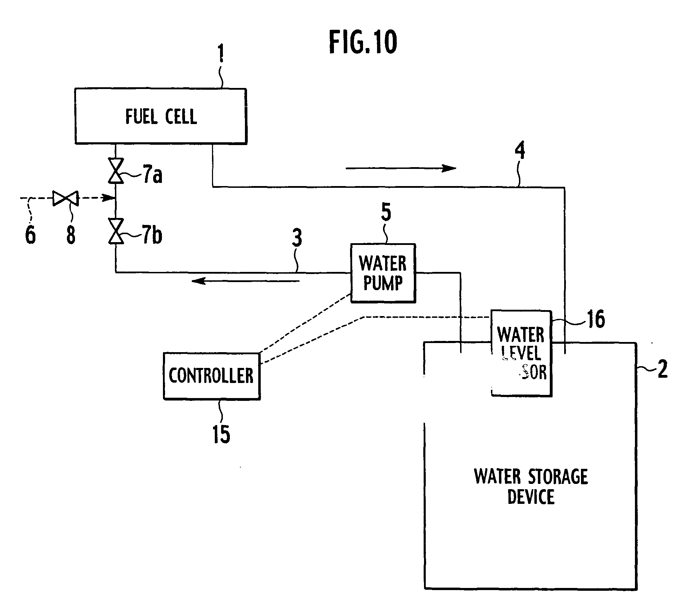

A fuel cell system of a third embodiment further includes, in addition to the structure of the second embodiment described above, a water level sensor 16 for measuring the water level in the region $R_2$ inside the water storage device 2 as shown in Fig. 10. The other structure is identical to that of the second embodiment and description of the same is herein omitted.

With the presently filed embodiment, the fuel cell system is arranged to allow the water level sensor 16 to monitor the water level in the region $R_2$ inside the water storage device 2 during start-up for controlling such that when the water level in the region $R_2$ drops below a given water level, the discharge rate of the water pump 5 is lowered to ensure the water level in the region $R_2$. This allows the water pump 5 to be prevented from encountering the intake of air, like in the second embodiment set forth above, thereby making it possible to allow the discharge rate of the water pump 5 to be appropriately maintained.

The given water level, at which the discharge rate of the water pump 5 is switched over, depends on a limit in the intake of air encountered by the water pump 5 and is preliminarily acquired on experiments and calculations. Moreover, with the presently filed embodiment, the fuel cell system is arranged such that at a timing in which the water level in the region $R_2$ exceeds the given water level, the discharge rate of the water pump 5 is restored to the standard discharge rate to allow water to be taken out of region $R_2$ in a standard volume.

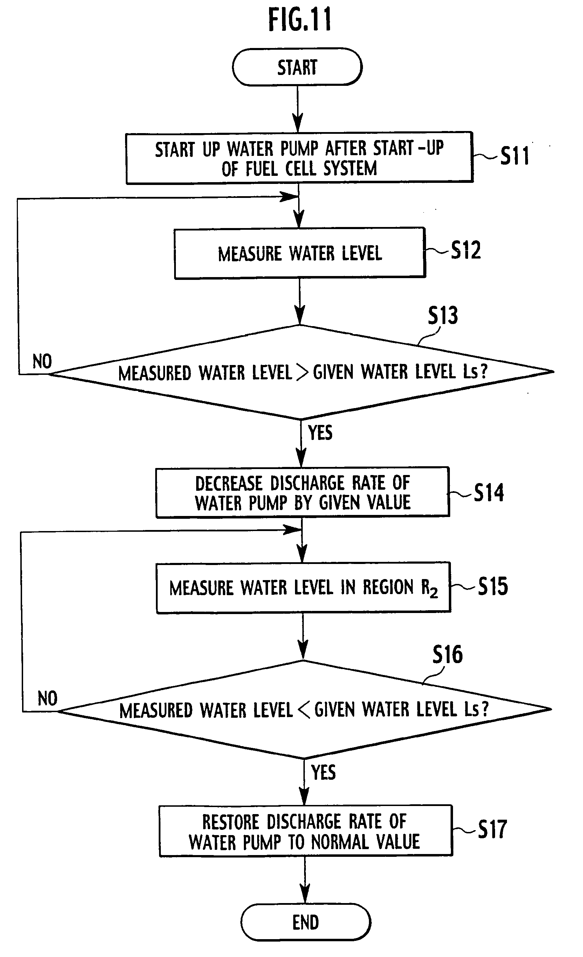

Fig. 11 is a flowchart illustrating a basic sequence of operations to be executed by the controller 15 in the fuel cell system of the presently filed embodiment for controlling the flow rate of the water pump 5.

With the presently filed embodiment, first, the water pump 5 is started up, followed by start-up of the fuel cell system, to begin the taking out of water from the region $R_2$ in the water storage device 2 at a standard flow rate (step S11). After start-up, the operation is executed to measure the water level in the region $R_2$ with the water level sensor 16 installed in the water storage device 2 (step S12) and discrimination is made to find whether the measured water level drops below a given water level Ls (a water level preliminarily acquired on the experiments and calculations) (step S13).

At a stage in which the measured water level drops below the given water level Ls, the discharge rate of the water pump 5 is decreased by a given value (step S14). Thereafter, the water level sensor 16 measures the water level in the region $R_2$ (step S15) and discrimination is made to find whether the measured water level is recovered to a value exceeding the given water level Ls (step S16). At a stage in which the measured water level exceeds the given water level Ls, the discharge rate of the water pump 5 is restored to the prescribed discharge rate (step S17).

Thus, with the fuel cell system of the presently filed embodiment, when the water pump takes out water of the middle region, located in an area closer to a center in the inside the water storage device, and the water level in such a region drops, water in the other regions flows into the region closer to the center through the communicating bores of the partition walls, thereby quickly addressing an issue of a drop in the water level.

Further, in the presence of acceleration applied to a vehicle due to leaning, turning, accelerating and the decelerating motions thereof, although water, inside the region closer to the center, is subjected to the binding effect resulting from the acceleration and flows into the region in a direction (a direction opposite to the acceleration) in which the binding effect acts, water flows into the region, closer to the center, from the opposing region (in the direction in which the acceleration is applied) and almost no variation takes place in the water level in the region closer to the center.

As will be apparent from the foregoing description, with the fuel cell system of the presently filed embodiment, even in the occurrence of the acceleration applied to the water storage device like in the leaning, turning, accelerating and decelerating motions of the vehicle, it becomes possible to minimize water deviation in the water takeoff region. Accordingly, with the fuel cell system of the presently filed embodiment, smooth supply of water can be realized.

The entire content of Japanese Patent Application No. P2003-375656 with a filing data of November 5, 2003 is herein incorporated by reference.

Although the present invention has been described above by reference to certain embodiments of the invention, the invention is not limited to the embodiments described above and modifications will occur to those skilled in the art, in light of the teachings. The scope of the invention is defined with reference to the following claims.

## Claims

1. A fuel cell system comprising:

   a fuel cell (1);
   a water storage device (2), having partition walls (9, 10), by which an inside of the water storage device is divided into a plurality of regions ($R_1$, $R_2$, $R_3$);
   a water circulating section (3) operative to cyclically supply water, stored in the water storage device, to the fuel cell; and
   a water purge section (6) operative to permit water in the fuel cell and water in the water circulating section to return to the water storage device during a halt of the fuel cell;

   wherein the plurality of partition walls include communicating bores ($13a_1$, $13a_2$) through which water is admitted to flow into a region ($R_2$), closer to a center among the divided regions, or to flow into the other regions during movement of water stored in the water storage device.

2. The fuel cell system according to claim 1, wherein:

   the communicating bores ($13a_1$, $13a_2$) have opening shapes each with a dimension (W) greater in a horizontal direction than that (H) in a vertical direction.

3. The fuel cell system according to claims 1 or 2, wherein:

   the plurality of partition walls (9, 10) have notches in contact with the communicating bores, respectively.

4. The fuel cell system according to claims 1, 2 or 3, wherein:

   the communicating bores ($13a_1$, $13a_2$) are chamfered.

5. The fuel cell system according to one of claims 1 to 4, wherein:

   the communicating bores ($13a_1$, $13a_2$) are formed in positions lower than a normal water level in the water storage device.

6. The fuel cell system according to one of claims 1 to 5, wherein:

   the communicating bore ($13a_1$ or $13a_2$) has an opening surface area Ad determined to fall in a range expressed as:

   $$As < Ad < Ag$$

   where
   As is the minimum opening surface area that makes it possible to maintain a water level available for water to be taken out of the water storage device after water has been taken out of the water storage device in a volume required to fill up the fuel cell and the circulation path during start-up of the system, or during a process in which water is being taken out,
   Ag is the maximum opening surface area that makes it possible to maintain the water level available for water to be taken out of the water storage device during a phase in which acceleration is applied due to fore and aft movements or leftward or rightward turning motions.

7. The fuel cell system according to one of claims 1 to 6, further comprising:

a controller (15) operative such that after a given time interval has elapsed from a time in which water begins to be taken out of the water storage device during start-up, a volume of water to be taken out is reduced by a given value and the volume of water to be taken out of the water storage device is restored to a standard volume of water.

8. The fuel cell system according to one of claims 1 to 6, further comprising:

a water level sensor (16) detecting a water level in a region of which water is taken out from the water storage device or to which water is returned; and
a controller (15) operative such that during start-up, when a water level detected by the water level sensor drops below a given water level, a volume of water to be taken out of the water storage device is decreased and when the water level detected by the water level sensor exceeds the given water level, the volume of water to be taken out of the water storage device is restored to a standard volume of water.

# FIG.1

## FIG.2

$A_2$

11 12 2

$A_3$

$R_1$ 13a$_1$ $R_2$ 13a$_2$ $R_3$

9 10

VEHICLE WIDTHWISE DIRECTION

## FIG.3

14a$_{11}$(14a$_{21}$) 14a$_{12}$(14a$_{22}$)

9(10)

H

L

13a$_1$(13a$_2$)

W

## FIG.4

$R_1(R_3)$                 9(10)        $R_2$

$13b_1(13b_2)$

$13a_1(13a_2)$

## FIG.5

$A_2$

11      12         2

$A_3$

$R_1$         $R_2$         $R_3$

$13a_1$           $13a_2$

9               10

**FIG.6**

**FIG.7**

# FIG.8

# FIG.9

```
              ┌─────────────┐
              │    START    │
              └─────────────┘
                     │
                     ▼
     ┌──────────────────────────────────┐
     │ START UP WATER PUMP AFTER START-UP│  ～S1
     │        OF FUEL CELL SYSTEM        │
     └──────────────────────────────────┘
                     │
                     ▼
          ┌────────────────────┐
          │    MEASURE TIME    │  ～S2
          └────────────────────┘
                     │
                     ▼
    S3
          ◇─────────────────────────◇
         ╱  MEASURED TIME > GIVEN     ╲   NO
         ╲       TIME T1 ?            ╱ ──────┐
          ◇─────────────────────────◇        │
                     │ YES                    │
                     ▼                        │
     ┌──────────────────────────────┐         │
     │   DECREASE DISCHARGE RATE OF  │  ～S4   │
     │   WATER PUMP BY GIVEN VALUE   │         │
     └──────────────────────────────┘         │
                     │                         │
    S5               ▼                         │
          ◇─────────────────────────◇         │
         ╱  MEASURED TIME < GIVEN     ╲   NO   │
         ╲       TIME T2 ?            ╱ ───────┤
          ◇─────────────────────────◇         │
                     │ YES                     │
                     ▼                         │
     ┌──────────────────────────────┐          │
     │   RESTORE DISCHARGE RATE OF   │  ～S6    │
     │  WATER PUMP TO NORMAL VALUE   │          │
     └──────────────────────────────┘          │
                     │                          │
                     ▼                          │
              ┌─────────────┐                   │
              │     END     │                   │
              └─────────────┘                   │
```

14

# FIG.10

# FIG.11

```
                    ┌─────────────┐
                    │    START    │
                    └─────────────┘
                           │
                           ▼
        ┌─────────────────────────────────────┐
        │  START UP WATER PUMP AFTER START-UP  │── S11
        │         OF FUEL CELL SYSTEM          │
        └─────────────────────────────────────┘
                           │
                           ▼
            ┌───────────────────────────┐
            │     MEASURE WATER LEVEL    │── S12
            └───────────────────────────┘
                           │
                           ▼
                                              S13
        ╱─────────────────────────────────────╲
   NO  ╱   MEASURED WATER LEVEL > GIVEN WATER LEVEL Ls ?  ╲
      ╲─────────────────────────────────────╱
                           │ YES
                           ▼
            ┌───────────────────────────┐
            │   DECREASE DISCHARGE RATE OF    │── S14
            │   WATER PUMP BY GIVEN VALUE     │
            └───────────────────────────┘
                           │
                           ▼
            ┌───────────────────────────┐
            │ MEASURE WATER LEVEL IN REGION R2 │── S15
            └───────────────────────────┘
                           │
                           ▼
                                              S16
        ╱─────────────────────────────────────╲
   NO  ╱   MEASURED WATER LEVEL < GIVEN WATER LEVEL Ls ?  ╲
      ╲─────────────────────────────────────╱
                           │ YES
                           ▼
            ┌───────────────────────────┐
            │    RESTORE DISCHARGE RATE OF    │── S17
            │   WATER PUMP TO NORMAL VALUE    │
            └───────────────────────────┘
                           │
                           ▼
                    ┌─────────────┐
                    │     END     │
                    └─────────────┘
```